# EUROPEAN PATENT SPECIFICATION

(11) **EP 3 433 130 B1**
(45) Date of publication and mention of the grant of the patent: **12.02.2020**
(21) Application number: 17718161.7
(22) Date of filing: 06.03.2017
(51) Int. Cl.: B60R 5/04

(54) **TRUNK PARTITION COVER STOPPER**
AUFHÄNGER FÜR KOFFERRAUMABDECKUNG
CINTRE POUR LA COUVERTURE DU TRONC

(30) Priority: 21.03.2016 TR 201603584
(43) Date of publication of application: 30.01.2019
(73) Proprietor: Tofas Turk Otomobil Fabrikasi Anonim Sirketi, Bursa (TR)
(72) Inventor: CAGLAR, Celalettin, 16369 Osmangazi/Bursa (TR); SEN, Nejdet, 16369 Osmangazi/Bursa (TR)
(74) Representative: Dericioglu, E. Korhan
(86) International application number: PCT/TR2017/050085
(87) International publication number: WO 2017/164828

(56) References cited:
- DE-A1-102014 225 630
- US-A- 925 184

## Description

### Field of the Invention

The present invention relates to a trunk partition cover stopper that enables the cover, which is openable and closable and is provided over the space located under the vehicle trunk floor, to be fastened in open position.

### Background of the Invention

Concealed additional spaces are used at the bottom part of the trunk floor for more efficient use of the trunks in the vehicles. These additional spaces are used for storing the spare tire, storing desired belongings in the said concealed compartment, and for similar purposes; and since the said additional space is located at the bottom part of the vehicle floor, an additional space cover is disposed to allow access to the additional space via the vehicle trunk. The additional space cover performs a rotational movement about the edge, from which it is connected to the vehicle floor; and thus it can perform an opening and closing movement on the vehicle trunk floor.

During loading goods to the concealed compartment in the trunk, the trunk floor cover should remain in open position. However, it is not possible for a person to keep the compartment in open position and load the goods at the same time. Therefore, the moveable compartment space cover should be fixed in open position. Otherwise, an ergonomic use cannot be achieved, and furthermore, an arm of the user holding the goods may get stuck or other safety risks may occur. Moreover, trunk floor panel gets deformed upon sudden closing of the additional space cover. In the state of the art, a rope and a hook are used on the cover to keep the additional cover fixed in open position. In the state of the art, the hook is fixed onto the vehicle trunk side wall and thus the additional cover can remain in open position. However in this technique, it is considerably difficult to attach the hook onto the vehicle side wall after the additional cover is opened, and attaching and detaching the hook causes loss of time.

United States patent document no. US8523268B2, an application in the state of the art, discloses an openable vehicle trunk compartment floor and a fixing mechanism which enables the trunk floor to remain in open and closed positions. In the said invention, a rope and a hook are used to keep the vehicle luggage compartment space cover open. When the floor is in open position, the hook is fixed onto the vehicle trunk side partition.

European patent document no. EP0927663, an application in the state of the art, discloses support plates of different heights provided on the vehicle side wall for attaching the surface panel (cover) on the vehicle trunk compartment in open positions. The said support plates are fixed on the surface panel, and when the surface panel is opened, they enable it to remain in open position.

The document US925184A discloses a cover position fixing member according to the preamble of claim 1.

### Problems Solved by the Invention

The objective of the present invention is to provide a trunk partition cover stopper which, particularly in vehicles with moveable rear parcel shelf, enables the cover of the additional space provided in the trunk space to remain in open position. The objective of the present invention is to provide a trunk partition cover stopper which, particularly in vehicles with moveable rear parcel shelf, enables the cover of the additional space provided in the trunk space to safely remain in open position by using a spring system.

The objective of the present invention is to provide a trunk partition cover stopper which, particularly in vehicles with moveable rear parcel shelf, enables the cover of the additional space provided in the trunk space to easily remain in open position by the user's power.

### Detailed Description of the Invention

The trunk partition cover developed to fulfill the objective of the present invention is illustrated in the accompanying figure, in which:

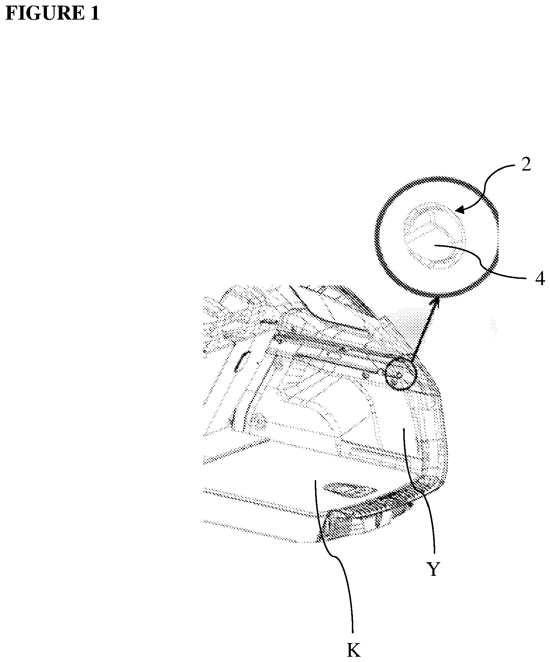

- **Figure 1.**: is a perspective view of the position of the inventive trunk partition cover stopper at positions where the cover is closed in the trunk space.

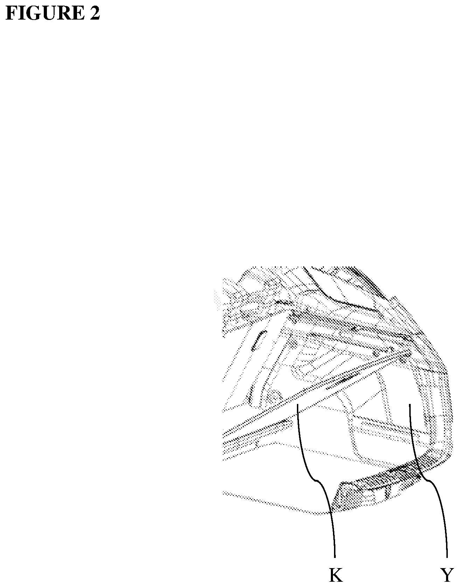

- **Figure 2.**: is a perspective view of the position of the inventive trunk partition cover stopper at positions where the cover is open in the trunk space.

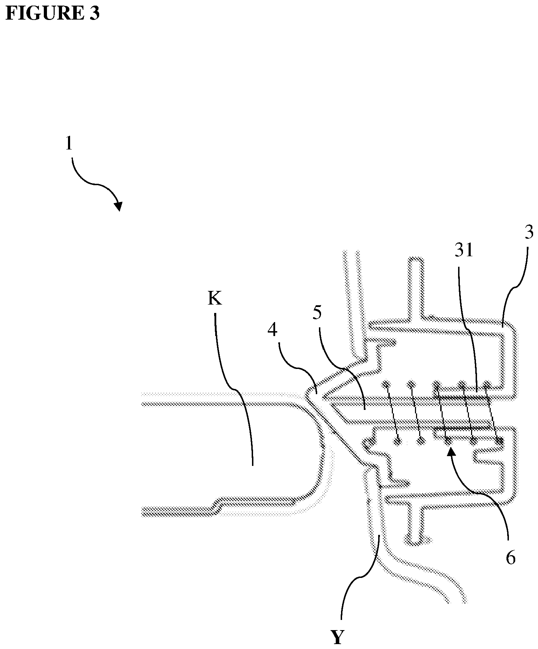

- **Figure 3.**: is a front sectional view of the position of the inventive trunk partition cover stopper before the cover passes over it.

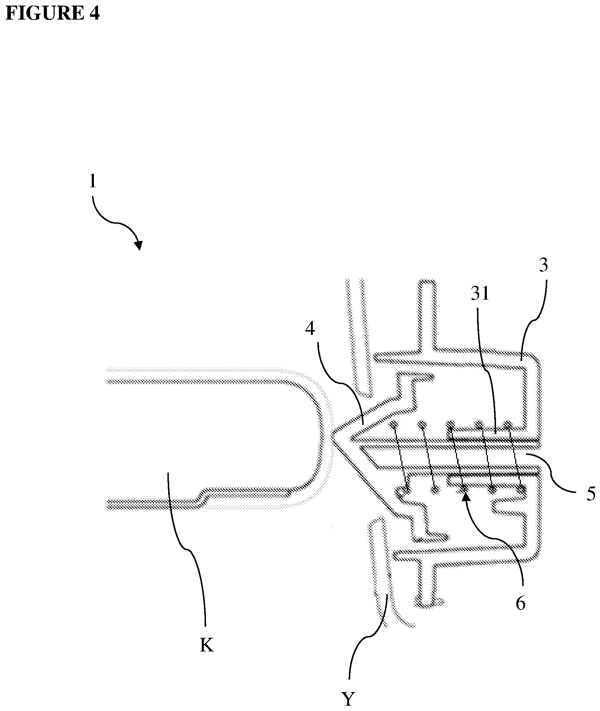

- **Figure 4.**: is a front sectional view of the position of the inventive trunk partition cover stopper when the cover is passing over it.

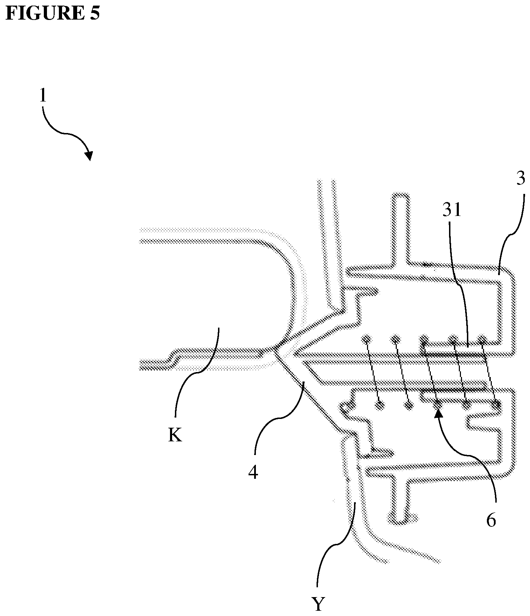

- **Figure 5.**: is a front sectional view of the position of the inventive trunk partition cover stopper after the cover passes over it.

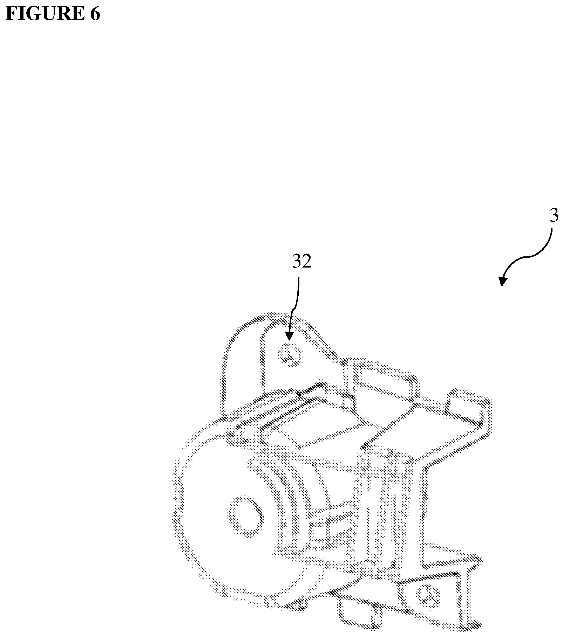

- **Figure 6.**: is a perspective view of the body provided in the inventive trunk partition cover stopper.

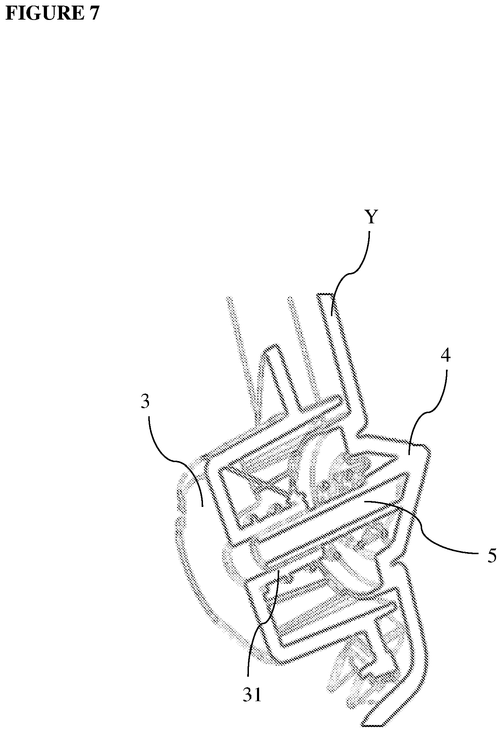

- **Figure 7.**: is a sectional perspective view of the inventive trunk partition cover stopper.

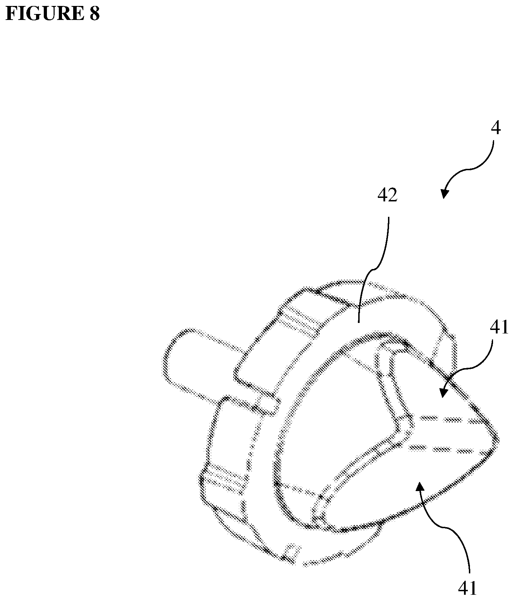

- **Figure 8.**: is a perspective view of the cover holder member provided in the inventive trunk partition cover stopper.

The components shown in the figures are each given reference numbers as follows:
**1.** Cover position fixing member
**2.** Mounting hole
**3.** Body
   **31.** Guideway
   **32.** Fixing hole
**4.** Headpiece
   **41.** Guiding edge
   **42.** Skirt
**5.** Shaft
**6.** Elastic member
**K.** Cover
**T.** Trunk floor
**Y.** Trunk side wall

A cover position fixing member (1) that enables the cover (K), which can be opened and closed over the additional space by means of a rotational movement around the place where it is connected to the trunk floor (T), to remain in open position in order for the additional space provided under the vehicle trunk floor (T) to be used, basically comprises
- at least one mounting hole (2) which is provided in the form of a hole on the trunk side wall (Y) that is perpendicular to the trunk floor (T),
- at least one body (3) which is a hollow structure disposed on the outer surface of the trunk side wall so as to correspond to the mounting hole (2),
- at least one guideway (31), which is provided on the body (3) so as to correspond to the mounting hole (2), and which is in the form of a hollow circular channel,
- at least one fixing hole (32), which is provided at the part of the body (3) that contacts the trunk side wall (Y), and which enables the body (3) to be fixed on the trunk side wall (Y) by means of a connecting member passing therethrough,
- at least one headpiece (4), which fits into the mounting hole (2) upon contact of the cover (K) during opening of the cover (K) by the user's power, and which, in case of the closing movement of the cover (K), abuts the cover thereby enabling the cover (K) to remain in open position,
- at least one guiding edge (41) which is provided in the form of an inclination on at least one edge of the headpiece (4) and which facilitates passing of the cover (K) over the headpiece (4),
- at least one skirt (42), which is provided in the form of a protrusion at the part of the headpiece (4) that contacts the outer surface of the trunk side wall (Y), and which restricts movement of the headpiece (4) out towards the trunk space over the mounting hole (2),
- at least one shaft (5), which extends from the headpiece (4) into the guideway (31) provided on the body (3), and which enables the headpiece (4) to move forward and backward only in horizontal axis when a force acts on the headpiece (4),
- at least one elastic member (6), which is positioned so as to surround the outer surface of the shaft (5) and the guideway (31) and is compressed between the headpiece (4) and the body (3) when a force acts on the headpiece (4), and which pushes the headpiece (4) towards the trunk space upon cancellation of the force acting on the headpiece (4).

The cover position fixing member (1) of the present invention is comprised of a headpiece (5), which is provided on the trunk side wall (Y) for fixing the cover (K) in open position; an elastic member (6), which enables the headpiece (4) to be moveable on the mounting hole (2) when the cover (K) contacts the headpiece (4); and a body (3), which provides room for movement to the headpiece (4) and the elastic member (6). The cover (K) performs a rotational movement around the trunk floor (T) to which it is connected, and the headpiece (4) performs a forward-backward movement on the mounting hole (2) when the cover (K) overlaps the headpiece (4) during opening and closing movement of the cover (K).

The cover position fixing member (1) of the present invention is positioned on the trunk side wall (Y) provided in the vehicle trunk space. When the cover (K) is switching from closed position to open position, the cover (K) contacts the headpiece (4) located on the mounting hole (2), and as a result of movement of the cover (K) by the user's power, the headpiece (4) fits into the mounting hole (2). This way, the cover (K) continues its opening movement over the headpiece (4). As the cover (K) passes over the headpiece (4), the headpiece (4) moves into the body (3) located on the outer surface of the trunk side wall (Y). The elastic member (6) located between the headpiece (4) and the body (3) is compressed upon movement of the headpiece (4) into the body (3), and upon cancellation of the force after the cover (K) passes over the headpiece (4), it pushes the headpiece (4) out of the body (3). The headpiece (4), which is pushed towards the trunk space by the elastic member (6), stops when the skirt (42) located on the base thereof contacts the outer surface of the trunk side wall (Y), and the headpiece (4) returns to its previous position where it was before the cover (K) overlaps it. When the cover (K) comes to the open position, it starts closing movement by its own force of gravity. The cover (K), which contacts the headpiece (4) again upon the closing movement, abuts the headpiece (4), and the cover (K) remains in open position as it cannot push the headpiece (4) without user power.

In the cover position fixing member (1) of the present invention, when the cover (K) is intended to be switched from open position to closed position, the user exerts force to close the cover (K), and as the cover (K) passes over the headpiece (4), the headpiece (4) moves into the body (3) located on the outer surface of the trunk side wall (Y). The elastic member (6) located between the headpiece (4) and the body (3) is compressed upon movement of the headpiece (4) into the body, (3) and upon cancellation of the force after the cover (K) passes over the headpiece (4), it pushes the headpiece (4) out of the body (3). This way, the cover (K) which is released from the headpiece (4) continues its closing movement.

In the cover position fixing member (1) of the present invention, as a result of the pushing force coming to the headpiece (4) from the cover (K), the headpiece (4) and the shaft (5) connected to the headpiece (4) move into the body (3). The shaft (5) which connects the headpiece (4) to the body (3) is located in the guideway (31) provided on the body (3), and it enables the headpiece (4) to move only in horizontal axis by transferring the axial forces acting on the headpiece (4) onto the guideway (31).

In one embodiment of the invention, the connecting member used for fixing the body (3) onto the outer surface of the trunk side wall (Y) is a screw. The screw passing through the fixing hole (32) provided on the body (3) fits into the outer surface of the trunk side wall (Y) thereby fixing the body (3) onto the trunk side wall (Y).

In one embodiment of the invention, a guiding edge (41) is provided in the form of an inclination at the edges of the headpiece (4). The inclination provided on the headpiece (4) facilitates passing of the cover (K) over the headpiece (4), and prevents deformation of the cover (K) or the headpiece (4).

In one embodiment of the invention the headpiece (4) is in a circular form. The circular form of the headpiece (4) facilitates passing of the cover (K) over the headpiece (4), and prevents deformation of the cover (K) or the headpiece (4).

In one embodiment of the invention, the elastic member (6) is a spring. The spring surrounds the shaft (5) and the guideway (31) with its spiral form and transfers force by means of its resilience.

In one embodiment of the invention, the elastic member (6) is rubber. The rubber piece carries out force transfer and stretching by means of its resilience.

In one embodiment of the invention the skirt (42) is in a circular form. The skirt (42), which is located on the base of the headpiece (4), and which restricts movement of the headpiece (4) out towards the trunk space, is situated so as to completely surround the base of the headpiece (4), and thus, transmits the pushing force coming from the spring onto the trunk side wall (Y) through more points.

## Claims

1. A vehicle trunk floor cover position fixing member (1) that enables the cover (K), which can be opened and closed over an additional space by means of a rotational movement around the place where it is connected to the trunk floor (T), to remain in open position in order for the additional space provided under the vehicle trunk floor (T) to be used, **comprising**
- at least one mounting hole (2) which is provided in the form of a hole on the trunk side wall (Y) that is perpendicular to the wtrunk floor (T),
- at least one body (3) which is a hollow structure disposed on the outer surface of the trunk side wall so as to correspond to the mounting hole (2),
- at least one guideway (31), which is provided on the body (3) so as to correspond to the mounting hole (2), and which is in the form of a hollow circular channel,
- at least one headpiece (4), which fits into the mounting hole (2) upon contact of the cover (K) during opening of the cover (K) by the user's power, and which, in case of the closing movement of the cover (K), abuts the cover thereby enabling the cover (K) to remain in open position,
- at least one shaft (5), which extends from the headpiece (4) into the guideway (31) provided on the body (3), and which enables the headpiece (4) to move forward and backward only in horizontal axis when a force acts on the headpiece (4),
- at least one elastic member (6), which is positioned so as to surround the outer surface of the shaft (5) and the guideway (31) and is compressed between the headpiece (4) and the body (3) when a force acts on the headpiece (4), and which pushes the headpiece (4) towards the trunk space upon cancellation of the force acting on the headpiece (4), **characterized in that**
- at least one skirt (42), which is provided in the form of a protrusion at the part of the headpiece (4) that contacts the outer surface of the trunk side coating (Y), and which restricts movement of the headpiece (4) out towards the trunk space over the mounting hole (2).

2. A cover position fixing member (1) according to Claim 1, **comprising** at least one fixing hole (32) which is provided at the part of the body (3) that contacts the trunk side wall (Y) and which enables the body (3) to be fixed onto the trunk side coating (Y) by a connecting member passing therethrough.

3. A cover position fixing member (1) according to Claim 1, **comprising** at least one guiding edge (41) which is provided in the form of an inclination on at least one edge of the headpiece (4) and which facilitates passing of the cover (K) over the head (4).

4. A cover position fixing member (1) according to Claim 1, **comprising** an elastic member (6) which is a spring.

5. A cover position fixing member (1) according to Claim 1, **comprising** a headpiece (4) which is circular.

6. A cover position fixing member (1) according to Claim 1, **comprising** a circular skirt (42) which completely surrounds the base of the headpiece (4).

## Patentansprüche

1. Deckelpositionsfixierungselement (1) für den Kofferraumboden eines Fahrzeugs, das es ermöglicht, dass der Deckel (K), der durch eine Drehbewegung um die Stelle, an der er mit dem Kofferraumboden (T) verbunden ist, über einen zusätzlichen Raum geöffnet und geschlossen werden kann, in geöffneter Position bleibt, damit der zusätzliche Raum, der unter dem Kofferraumboden (T) des Fahrzeugs vorgesehen ist, genutzt werden kann, **umfassend**
- mindestens ein Befestigungsloch (2), das in Form eines Loches an der Kofferraumseitenwand (Y) vorgesehen ist, das senkrecht zum Kofferraumboden (T) steht
- mindestens einen Körper (3), der eine Hohlstruktur ist, die an der Außenfläche der Kofferraumseitenwand so angeordnet ist, dass sie mit dem Befestigungsloch (2) korrespondiert,
- mindestens eine Führungsbahn (31), die korrespondierend zur Befestigungsloch (2) am Körper (3) vorgesehen ist und die als hohler Rundkanal geformt ist,
- mindestens ein Kopfstück (4), das bei Berührung des Deckels (K) während des Öffnens des Deckels (K) durch die Kraft des Benutzers in das Befestigungsloch (2) eingepasst wird, und das bei der Verschlussbewegung des Deckels (K) an dem Deckel anliegt, sodass der Deckel (K) in geöffneter Position bleiben kann,
- mindestens einen Schaft (5), der sich vom Kopfstück (4) in die am Körper (3) vorgesehene Führungsbahn (31) erstreckt und der eine Vor- und Rückwärtsbewegung des Kopfstücks (4) nur in horizontaler Achse ermöglicht, wenn eine Kraft auf das Kopfstück (4) wirkt
- mindestens ein elastisches Element (6), das so angeordnet ist, dass es die Außenfläche des Schafts (5) und die Führungsbahn (31) umgibt und zwischen dem Kopfstück (4) und dem Körper (3) zusammengedrückt wird, wenn eine Kraft auf das Kopfstück (4) wirkt, und das das Kopfstück (4) bei Aufhebung der auf das Kopfstück (4) wirkenden Kraft in Richtung des Kofferraums drückt, **dadurch gekennzeichnet, dass**
- mindestens eine Schürze (42), die in Form eines Vorsprungs an dem Teil des Kopfstücks (4) vorgesehen ist, der die Außenfläche der Kofferraumseitenbeschichtung (Y) berührt, und die eine Bewegung des Kopfstücks (4) über das Befestigungsloch (2) hinaus in Richtung auf den Kofferraum begrenzt.

2. Deckelpositionsfixierungselement (1) nach Anspruch 1, **umfassend** mindestens ein Fixierungsloch (32), das an dem Teil des Körpers (3) vorgesehen ist, der die Kofferraumseitenwand (Y) berührt, und das es ermöglicht, den Körper (3) an der Kofferraumseitenbeschichtung (Y) durch ein durchgehendes Verbindungselement zu befestigen.

3. Deckelpositionsfixierungselement (1) nach Anspruch 1, **umfassend** mindestens eine Führungskante (41), die in Form einer Neigung an mindestens einer Kante des Kopfstücks (4) vorgesehen ist und die das Passieren des Deckels (K) über den Kopf (4) erleichtert.

4. Deckelpositionsfixierungselement (1) nach Anspruch 1, **umfassend** ein elastisches Element (6), das eine Feder ist.

5. Deckelpositionsfixierungselement (1) nach Anspruch 1, **umfassend** ein Kopfstück (4), das kreisförmig ist.

6. Deckelpositionsfixierungselement (1) nach Anspruch 1, **umfassend** eine kreisförmige Schürze (42), die die Basis des Kopfstücks (4) vollständig umgibt.

## Revendications

1. Elément de fixation (1) de la position du couvercle du plancher du coffre d'un véhicule qui active le couvercle (K), qui peut être ouvert et fermé sur un espace supplémentaire au moyen d'un mouvement de rotation autour de l'endroit où il est relié au plancher du coffre (T), pour rester en position ouverte afin que l'espace supplémentaire prévu sous le plancher du coffre du véhicule (T) puisse être utilisé, **comprenant**
- au moins un trou de montage (2) qui est prévu sous la forme d'un trou sur la paroi latérale du coffre (Y) qui est perpendiculaire au plancher du coffre (T),
- au moins un corps (3) qui est une structure creuse disposée sur la surface extérieure de la paroi latérale du coffre de manière à correspondre au trou de montage (2),
- au moins une glissière (31), qui est prévue sur le corps (3) de manière à correspondre au trou de montage (2), et qui est réalisée sous la forme d'un canal circulaire creux,
- au moins une pièce de tête (4), qui s'adapte dans le trou de montage (2) lors du contact du couvercle (K) pendant l'ouverture du couvercle (K) par la puissance de l'utilisateur, et qui, en cas de mouvement de fermeture du couvercle (K), vient en butée contre le couvercle, permettant ainsi au couvercle (K) de rester en position ouverte,
- au moins un arbre (5), qui s'étend de la pièce de tête (4) dans la glissière (31) prévue sur le corps (3), et qui permet à la pièce de tête (4) de se déplacer vers l'avant et vers l'arrière uniquement dans l'axe horizontal lorsqu'une force agit sur la pièce de tête (4),
- au moins un élément élastique (6), qui est positionné de manière à entourer la surface extérieure de l'arbre (5) et la glissière (31) et est comprimé entre la pièce de tête (4) et le corps (3) lorsqu'une force agit sur la pièce de tête (4), et qui pousse la pièce de tête (4) vers l'espace du coffre lors de la suppression de la force agissant sur la pièce de tête (4), **caractérisé en ce que**
- au moins une jupe (42), qui est prévue sous la forme d'une saillie sur la partie de la pièce de tête (4) qui est en contact avec la surface extérieure du revêtement latéral du coffre (Y), et qui limite le mouvement de la pièce de tête (4) vers l'espace du coffre au-dessus du trou de montage (2).

2. Elément de fixation (1) de la position du couvercle selon la revendication 1, **comprenant** au moins un trou de fixation (32) qui est prévu sur la partie du corps (3) qui est en contact avec la paroi latérale du coffre (Y) et qui permet de fixer le corps (3) sur le revêtement de côté coffre (Y) par un élément de connexion le traversant.

3. Elément de fixation (1) de la position du couvercle selon la revendication 1, **comprenant** au moins un bord de guidage (41) qui est prévu sous la forme d'une inclinaison sur au moins un bord de la pièce de tête (4) et qui facilite le passage du couvercle (K) sur la tête (4).

4. Elément de fixation (1) de la position du couvercle selon la revendication 1, **comprenant** un élément élastique (6) qui est un ressort.

5. Elément de fixation (1) de la position du couvercle selon la revendication 1, **comprenant** une pièce de tête (4) qui est circulaire.

6. Elément de fixation (1) de la position du couvercle selon la revendication 1, **comprenant** une jupe circulaire (42) qui entoure complètement la base de la pièce de tête (4).
